# EUROPEAN PATENT SPECIFICATION

(11) **EP 1 418 542 B1**
(45) Date of publication and mention of the grant of the patent: **28.03.2007**
(21) Application number: 02024877.9
(22) Date of filing: 08.11.2002
(51) Int. Cl.: G06T 1/00, G07D 7/12

(54) **Watermarking a security document**
Einbringen eines Wasserzeichens in ein Sicherheitsdokument
Formation de filigrane numérique dans un document de sécurité

(43) Date of publication of application: 12.05.2004
(73) Proprietor: European Central Bank, 60311 Frankfurt am Main (DE)
(72) Inventor: Arrieta, Antonio J., 60311 Frankfurt am Main (DE)
(74) Representative: Luderschmidt, Schüler & Partner

(56) References cited:
- WO-A-01/69915
- GB-A- 2 346 110
- US-A- 6 111 954

## Description

The present invention relates to a process for including readable data in a substrate of a security document and for reading and processing data from a substrate of a security document. Furthermore, the invention relates to a security document comprising a substrate including readable data.

The identification and authentication of security documents, e. g. banknotes, passports, identity cards, checks, stocks, bonds etc., is a long standing problem. In order to solve this goal, security means for banknotes have been developed to allow users and/or machines to discriminate between real and forged banknotes and/or discriminate between different values of banknotes. Among the techniques adopted are the use of special papers, special inks and patterns, the inclusion of security threads and watermarks as well.

Watermarked paper is as old as the own papermaking process. Multitone watermarks have been used for centuries in order to personalise and - lately- to secure paper used as a substrate for security documents. Watermarks are produced during the paper making process and are inherent to the fibrous substrate, not being possible to be removed or deleted without damaging the substrate of the paper.

The quality of multitone watermarks is assessed by visual comparison made by naked eye. The acceptance of the watermark is based in the sharpness and the contrast of the image.

Due to the highly specialised equipment needed for producing watermarks in paper, watermarks have been considered high security features for security documents. In fact, watermarks have been used in most of all banknotes issued nowadays. This security feature may be checked by people as well as machines in order to assess the genuineness of the document.

Nowadays all modern paper mills producing multitone watermarked paper mainly used for security documents make use of CAD - CAM (Computer Aid Design - Computed Aid Manufacturing) Systems. This production technique gives more flexibility and accuracy than the previous hand engraving technique in dyed wax at the beginning of the multitone watermarked paper manufacturing.

Using modern computer technology, the chosen watermark subject, i. e. the image to be reproduced as a watermark, is embossed into a wire cloth. This wire cloth or mould cover, once fitted to a cylinder and installed on a paper machine, will form the paper complete with an integrated watermark. The rotating cylinder mould draws the specially prepared cotton fibers onto a finely embossed mesh, resulting in subtle variations in fibre concentration in the contours of the mould as the paper is formed. These gentle contours of the mould produce the superior tonal range that is unique to the cylinder mould-made watermark process (Banknote papermaking, Brochure, PORTALS, Overton Mill, Overton, Basingstoke, Hampshire, RG25 3JG, UK).

On the other hand, watermarked paper has been used for encoding information. As the multitone watermark is a paper thickness and opacity modulation, the arrangement of this modulation following specific patterns can be used as an encoding information system. This technique under the form of a bar code watermark is used in some banknotes put into circulation, i.e. EURO banknotes as well as other currencies.

Linear barcode data carries are the most prominent and well established of the data carrier technologies having been in widespread use. The barcodes are printed and the information is obtained by scanning the barcode in the visible spectrum.

It is a drawback of barcode watermarks already used in banknotes that they are quite evident for the general public since they can be seen just holding the banknote against light. Furthermore, the information that is possible to be included is quite limited.

Matrix codes are a further form of printable two-dimensional data carriers, comparable in many respects to multi-row barcode data carriers. However, they differ in the way the data is held in spatial terms. Instead of bars and spaces the data encoded into matrix codes are stored in cells, which are filled or unfilled to represent the binary data, using a contrasting colour to distinguish the filled cells. In the majority of cases, the individual cells abut their neighbours directly, though there is a small subgroup, know as dot matrix codes where the individual cells do not touch. However, matrix code watermarks have never been used in security documents until today.

With respect to the decreasing price and thus increasing availability of advanced reproduction equipment, it may be feared that counterfeits produce printed reproductions of watermarks. Depending on the degree of expertise of the criminals, some reproductions could cheat not only the general public using the security documents but also validating machines used for security documents assessment because of the use of different but limited levels of opacity.

US 6,111,954 A describes a method for enhancing the security associated with the use of photo ID documents by supplementing the photographic image with encoded information, which information may or may not be visually perceptible. According to a preferred embodiment, US 6,111,954 A describes a security document comprising a composite of an image of an individual and a linear bar code. The image of the individual and the bar code are printed on the substrate of the security document.

GB 2 346 110 A discloses a substrate for security documents such as bank notes comprising a 2D matrix code which is invisible to the eye but detectable after scanning by computer. The document teaches that the code may be formed by embossing, laser treatment or watermarking. Both the code formed as a watermark and the graphical structure as a printed image, however, are produced side by side on the substrate of the security document.

It is an object of the present invention to provide a method for including readable data in a security document, particularly a banknote, for allowing machines to discriminate between real and forged banknotes and/or to discriminate among different values of banknotes, the readable data being not evident for the general public.

It is another object of the present invention to provide a method for including readable data in a security document, particularly a banknote, which is difficult for the counterfeiter to replicate convincingly.

It is a further object of the present invention to provide a security document, particularly a banknote, including readable data for allowing machines to discriminate between real and forged banknotes and/or to discriminate among different values of banknotes, the readable data being not evident for the general public.

A further object of the present invention is to provide a security document including readable data, particularly a banknote, which is difficult for the counterfeiter to replicate convincingly.

Furthermore, it is an object of the present invention to provide a method for processing the data included in said security document and a process for identification and/or authentication of said security document.

Another object of the present invention is to provide a method for automatic assessing the quality of a multitone watermark with objective parameters.

The above objects are solved with the features of the independent claims 1, 6 and 11, respectively. Preferred embodiments are the subject matter of the dependent claims.

According to the present invention, a matrix code as a data carrier for readable data, i.e. the encoded information to be stored, and a graphical structure for the chosen watermark subject are combined using conventional computers for image processing. The combination of the matrix code and the graphical structure which is the new image is reproduced as a watermark in the substrate of the security document using conventional methods for producing watermarks.

A main advantage of having a matrix code embedded in a watermark background image is that the matrix code is not visible for the general public, but the data is readable using conventional data decoders by reading the watermark, extracting the matrix code from the background image and decoding the data from the matrix code. The decoded data can be processed using conventional data processing systems.

It is an important aspect of the invention that the encoded data allow the identification and/or authentication of the security document as well as the assessment of the quality of the watermark by comparing the decoded data with predetermined data.

The matrix code is capable of representing a high amount of information in a given area for a given unit dimension. In a preferred embodiment the matrix code is a dot matrix code in which the data containing part of the cells are surrounded by a small area of clear space. For matrix codes, the use of robust error detection and correction techniques is essential.

According to a specific embodiment, the security document is a banknote and the substrate is a sheet of paper.

For the purpose of illustrating the present invention, there are shown in the accompanying drawings embodiments which are presently preferred; it being understood that the invention is not limited to the precise arrangement and instrumentalities shown.
- FIG. 1: is a schematic view of a banknote comprising a watermark according to the invention,
- FIG. 2: is an enlarged view of the watermark of the banknote of FIG. 1,
- FIG. 3: is a view showing a mosaic effect of a conventional watermark, and
- FIG. 4: is a view showing a dot matrix code to be embedded in the existing watermark of FIG. 3.

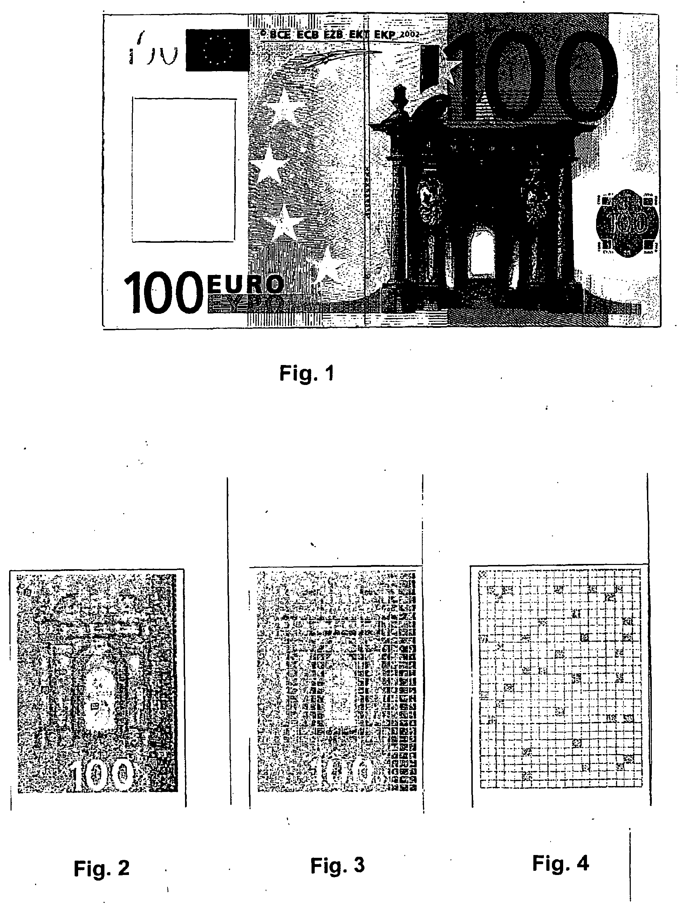

FIG. 1 shows a schematic view of the front side of a security document according to the invention, which is a banknote in the preferred embodiment. The banknote comprises a substrate made of a sheet of paper. A graphical design printing is provided on the front and reverse side of the substrate. The banknote comprises a watermark according to the invention as well as a security thread made of a metal strip and a hologram. The watermark includes readable data for the identification and/or authentication of the security document as well as the assessment of the quality of the watermark.

For including readable data in the substrate of the banknote a watermark is produced in the sheet of paper of the banknote. The method for producing the watermark according to the invention is as follows.

The first step of producing the watermark is to chose the watermark subject, i.e. a graphical structure. The graphical structure can be obtained by photographing, scanning a document or directly drawing. The graphical structure is recorded by a video camera to obtain a computerised image file. Then, using appropriate image treating software the graphical structure is retouched, enhanced, modified, etc. to receive a graphical structure image having predetermined dimensions.

The second step is to encode predetermined data in a dot matrix code of the same dimensions as the graphical structure image by converting the data to a bit stream and arranging it according to the rules of the symbology. The matrix code symbols are generally characterized by features that allow the symbology to be recognized in a captured image, i.e. finder pattern, and allow its orientation or alignment to be established and the data to be retrieved.

The code for encoding the data can be a 3-D one, i. e. X and Y co-ordinates for the allocation of the pixel within the watermark dimensions and Z co-ordinate corresponding to a 3, 5, etc. different grey levels. These grey levels in the dot matrix will mean different opacity levels in the watermark.

In a third step, an image is created by combining the graphical structure image and the dot matrix code using the tiny mosaic effect of a conventional watermark. FIG. 3 is a view showing the mosaic effect of a convential watermark, and FIG. 4 is a view showing the dot matrix code to be embedded in the existing watermark using the tiny mosaic effect of the existing watermark. This image is reproduced as a multitone watermark using the well known engraving and embossing technology for producing watermarks.

Once the code has been generated, the operator in charge of the watermark origination has to fit its dimensions to the watermark dimensions and to store this code in an image file format. The image to be used for the watermark is stored in the same format and computer. Then, the combination can be performed using modern software applications for image treatment, because this is one of the standard applications, to overlap one image to another one. The overlapping has to be done putting the multitone watermark image as a background of the code image, prevailing the code pixels in the area where it existed and the multitone watermark image pixels where no code is included.

A new picture is obtained, that could be interpreted as the original image for the watermark with some areas (where the code pixels are allocated) showing a change in the grey level: the code grey level; or as the code image showing the multitone watermark image as a background.

One of the key aspects of the invention is that the size of the pixels to use in the code generation has to be small enough to avoid naked eye recognition. Both the software and the hardware used for the above steps are widely market available and no restrictions for its usage can be expected. For instance, as software it could be used any professional image handling sofware as Adobe Photoshop ^{®}, Adobe Illustrator ^{®}, CorelDraw ^{®}, etc. As hardware any computer with enough graphic memory and appropriate graphic design peripherals can be used.

For producing the multitone watermark, the above image has now to be transferred to an embossing tool. This process is performed by a milling machine that can "translate" the image to 3 dimensions according to the different grey levels of the image. This correlation of grey levels to height is made by specific engraving software available in the market, as Millwright^{®} from Endpoint Software, Type3^{®} , etc. This task has to be done twice for complementary images, in order to create a dye and a counterdye (male and female) for embossing the tridimensional image on a metallic mesh.

The metallic mesh with the tridimensional image embossed is affixed to a drum (mould). The image embossed makes the diameter of the mould cover change in specifically allocated areas. The mould is introduced in a vat where a fibre suspension in water is continuously fed and dewatered through the mould cover. This process of fibres dewatering through the mould cover creates a fibre layer that constitutes the paper web. This paper web is continuously removed from the mould cover. The change in the diameter of the mould creates a change in the deposited fibre layer thickness that reproduces exactly the image embossed in the mould cover. Then the paper is pressed and dried.

The data are readable with a data reader (IR-spectrum). The data reader detects the watermark on the banknote within a predetermined area of the paper and extracts the dot matrix code from the structural image, i.e. the background watermark. Furthermore, the data reader decodes the data of the dot matrix code converting the data into a form that is suitable for further processing within a computer, information or control system for identification and/or authentication of the security document as well as the assessment of the quality of the watermark.

For the identification of the banknote, the computer, information or control system compares the decoded data of the dot matrix with predetermined data representing specific values of the banknote taking into consideration error detection and correction techniques. If there is a correspondence between the decoded data and the predetermined data representing the specific value the system detects that the banknote has the specific value.

For authentication of the banknote and assessment of the quality of the watermark, the system also compares the decoded data with predetermined data and makes a decision whether or not the data are between given values.

In accordance with the correlation between the decoded data and predetermined data representing a real banknote the system discriminates between real and forged banknotes. Accordingly to the correlation between the decoded data and predetermined data representing a watermark of high quality the systems detects the quality of the watermark. The impossibility of reading the code will be a good indicator that the watermark quality is not good enough. A more refined analysis could be done taking into account the self-correction that the systems would need to apply in order to read the code: the bigger the self-correction made, the poorer is the watermark quality.

The data reader scans the security document including the encoded watermark in the visible or in the infrared spectrum by transmitted light and the image has to be captured for further treatment.

The extraction of the code could be done following two different ways. It has to be taken into account that the code image is "over" the image watermark.

One extraction possibility will be subtracting from the combined image the pre-stored image of the watermark without code (that is, of course, available), and then to compare with either pre-stored code images or to de-code directly the image.

The second method is to apply the mosaic effect to the image and to analyse the opacity of each one of the pixels, looking for a sequence combination that will be understood as a code for the ad-hoc software.

In both cases, the correction is done with the opacity of the paper background around the watermark, which corresponds with the watermark "zero level". The opacity of the code pixels embedded in the watermark will be higher or lower than this background opacity. Same opacity corresponds with the absence of code pixel for those co-ordinates. It is not possible to work with absolute opacity levels because an overall opacity change in the paper due to changes in the production process will disrupt the reading.

The analysis of the opacity either at pre-specified allocations or through all the watermark, and the comparison with pre-established levels is preferable done within certain thresholds in order to identify as information encoded. These thresholds could be adjusted manually by the operator of the recognition system or automatically by the own system as a derived calculus from the irregularity of the background opacity, that means the irregularity in the paper opacity.

## Claims

1. Method for including readable data in a security document comprising a substrate with the following steps:
Providing a graphical structure,
Encoding data in a matrix code, said matrix code comprising a plurality of cells as data carriers for said readable data at predetermined areas with predetermined dimensions,
Creating an image combining said graphical structure and said matrix code so that the plurality of cells of the matrix code being embedded in predetermined areas with predetermined dimensions of said graphical structure, and
Reproducing said image in said substrate as a watermark so that predetermined areas with predetermined dimensions of said watermark represent said data carriers for said readable data.

2. Method according to claim 1, wherein said security document is a banknote including said substrate.

3. Method according to claim 1 or 2, wherein said substrate is a sheet of paper.

4. Method according to one of claims 1 to 3, wherein said matrix code is a dot matrix code.

5. Method according to one of claims 1 to 4, wherein said image is reproduced as a watermark in a predetermined area of the security document.

6. Security document including readable data comprising a substrate having an image being reproduced as a watermark, wherein the image combines a graphical structure (Fig. 3) and a matrix code (Fig. 4) comprising a plurality of cells as data carriers for said readable data at predetermined areas with predetermined dimensions.

7. Security document according to claim 6, wherein said security document is a banknote including said substrate.

8. Security document according to claim 6 or 7, wherein said substrate is a sheet of paper.

9. Security document according to one of claims 6 to 8, wherein said matrix code is a dot matrix code.

10. Security document according to one of claims 6 to 9, wherein said image is reproduced as a watermark in a predetermined area of the security document.

11. Method for processing data included in a security document according to one of claims 6 to 10 with the following steps:
Detecting said image reproduced as said watermark,
Extracting said matrix code from said image, and
Decoding said data from said matrix code.

12. Method according to claim 11, wherein said data are compared with predetermined data for identification and/or authentication of the banknote.

## Patentansprüche

1. Verfahren zum Einschluss von lesbaren Daten in ein ein Substrat umfassendes Sicherheitsdokument mit den folgenden Schritten:
Bereitstellen einer grafischen Struktur,
Kodieren von Daten in einem Matrixcode, wobei der Matrixcode eine Mehrzahl von Zellen als Datenträger für die lesbaren Daten in vorbestimmten Bereichen mit vorbestimmten Abmessungen umfasst,
Erzeugen eines Bilds, das die grafische Struktur und den Matrixcode kombiniert, so dass die Mehrzahl von Zellen des Matrixcodes in vorbestimmten Bereichen mit vorbestimmten Abmessungen der grafischen Struktur eingebettet werden, und
Reproduzieren des Bilds in dem Substrat als ein Wasserzeichen, so dass vorbestimmte Bereiche mit vorbestimmten Abmessungen des Wasserzeichens die Datenträger für die lesbaren Daten darstellen.

2. Verfahren nach Anspruch 1, bei dem das Sicherheitsdokument eine das Substrat umfassende Banknote ist.

3. Verfahren nach Anspruch 1 oder 2, bei dem das Substrat ein Papierbogen ist.

4. Verfahren nach einem der Ansprüche 1 bis 3, bei dem der Matrixcode ein Punktmatrixcode ist.

5. Verfahren nach einem der Ansprüche 1 bis 4, bei dem das Bild in einem vorbestimmten Bereich des Sicherheitsdokuments als ein Wasserzeichen reproduziert wird.

6. Sicherheitsdokument, das lesbare Daten enthält, umfassend ein Substrat mit einem als ein Wasserzeichen reproduzierten Bild, wobei das Bild eine grafische Struktur (Fig. 3) und einen Matrixcode (Fig. 4) kombiniert, der eine Mehrzahl von Zellen als Datenträger für die lesbaren Daten in vorbestimmten Bereichen mit vorbestimmten Abmessungen umfasst.

7. Sicherheitsdokument nach Anspruch 6, bei dem das Sicherheitsdokument eine das Substrat umfassende Banknote ist.

8. Sicherheitsdokument nach Anspruch 6 oder 7, bei dem das Substrat ein Papierbogen ist.

9. Sicherheitsdokument nach einem der Ansprüche 6 bis 8, bei dem der Matrixcode ein Punktmatrixcode ist.

10. Sicherheitsdokument nach einem der Ansprüche 6 bis 9, bei dem das Bild in einem vorbestimmten Bereich des Sicherheitsdokuments als ein Wasserzeichen reproduziert ist.

11. Verfahren zum Verarbeiten von in einem Sicherheitsdokument enthaltenen Daten nach einem der Ansprüche 6 bis 10 mit den folgenden Schritten:
Detektieren des als das Wasserzeichen reproduzierten Bilds,
Gewinnen des Matrixcodes aus dem Bild, und
Dekodieren der Daten von dem Matrixcode.

12. Verfahren nach Anspruch 11, bei dem die Daten mit vorbestimmten Daten zur Identifizierung und/oder Authentifizierung der Banknote verglichen werden.

## Revendications

1. Procédé pour inclure des données lisibles dans un document de sécurité comprenant un substrat, avec les étapes suivantes consistant à:
former une structure graphique,
coder des données dans un code matriciel, ledit code matriciel comprenant une pluralité de cellules en tant que porteurs de données pour lesdites données
lisibles au niveau de zones prédéterminées avec des dimensions prédéterminées,
créer une image combinant ladite structure graphique et ledit code matriciel
de sorte que la pluralité de cellules du code matriciel soit intégrée dans les
zones prédéterminées avec les dimensions prédéterminées de ladite structure
graphique, et
reproduire ladite image dans ledit substrat en tant que filigrane numérique de
sorte que les zones prédéterminées avec les dimensions prédéterminées dudit
filigrane numérique représentent lesdits porteurs de données pour lesdites données lisibles.

2. Procédé selon la revendication 1, dans lequel ledit document de sécurité est un billet de banque comprenant ledit substrat.

3. Procédé selon la revendication 1 ou 2, dans lequel ledit substrat est une feuille de papier.

4. Procédé selon l'une des revendications 1 à 3, dans lequel ledit code matriciel est un code matriciel de point.

5. Procédé selon l'une des revendications 1 à 4, dans lequel ladite image est reproduite en tant que filigrane numérique dans une zone prédéterminée du document de sécurité.

6. Document de sécurité comprenant des données lisibles comprenant un substrat ayant une image reproduite en tant que filigrane numérique, dans lequel l'image combine une structure graphique (figure 3) et un code matriciel (figure 4) composé d'une pluralité de cellules en tant que porteurs de données pour lesdites données lisibles au niveau de zones prédéterminées avec des dimensions prédéterminées.

7. Document de sécurité selon la revendication 6, dans lequel ledit document de sécurité est un billet de banque comprenant ledit substrat.

8. Document de sécurité selon la revendication 6 ou 7, dans lequel ledit substrat est une feuille de papier.

9. Document de sécurité selon l'une des revendications 6 à 8, dans lequel ledit code matriciel est un code matriciel de point.

10. Document de sécurité selon l'une des revendications 6 à 9, dans lequel ladite image est reproduite en tant que filigrane numérique dans une zone prédéterminée du document de sécurité.

11. Procédé pour traiter des données incluses dans un document de sécurité selon l'une des revendications 6 à 10, avec les étapes suivantes consistant à :
détecter ladite image reproduite en tant que ledit filigrane numérique,
extraire ledit code matriciel de ladite image, et
décoder lesdites données à partir dudit code matriciel.

12. Procédé selon la revendication 11, dans lequel lesdites données sont comparées aux données prédéterminées pour identification et/ou authentification du billet de banque.
